# EUROPEAN PATENT APPLICATION

(11) **EP 4 664 886 A1**
(43) Date of publication of application: **17.12.2025**
(21) Application number: 25182313.4
(22) Date of filing: 12.06.2025
(51) Int. Cl.: H04N 19/40, H04N 21/234, H04N 21/2343

(54) **TECHNIQUES FOR PROVIDING VIDEO FRAMES IN TEMPORAL ENCODING SCHEMES**

(30) Priority: 13.06.2024 US 202418742704
(71) Applicant: Tyco Fire & Security GmbH, 8212 Neuhausen am Rheinfall (CH)
(72) Inventor: FEE, Paul, 8212 Neuhausen am Rheinfall (CH); MCCAMBRIDGE, John, 8212 Neuhausen am Rheinfall (CH); KELLY, Christopher, 8212 Neuhausen am Rheinfall (CH); DENNIS, Kevin, 8212 Neuhausen am Rheinfall (CH)
(74) Representative: Meissner Bolte Nürnberg

(57) **Abstract**

Systems and methods are disclosed for providing a requested video frame to a device. A group of pictures (GOP) for an encoded video stream captured by a camera can be obtained by a video recorder, where the GOP includes a key frame and, for each frame of multiple frames following the key frame, a delta frame that describes a delta from a previous frame or from a next frame to render the frame. The video recorder can generate, for at least one frame in the multiple frames, a new key frame corresponding to the at least one frame by obtaining the key frame and applying, to the key frame, a portion of the delta frames between the key frame and the at least one frame. The video recorder can provide the new key frame to the device.

## Description

### BACKGROUND

The present disclosure relates to cameras deployed within an area, and more particularly to capturing video from the cameras using a video recorder that can provide the captured video for playback. The invention relates in particular to a video recorder, to a computer-implemented method for providing a requested video frame to a device and to a computer-readable medium storing instructions thereon that, when executed by at least one computing device, cause the at least one computing device to perform operations for providing a requested video frame to a device.

Many areas, such as areas within a building, have cameras deployed for various purposes, such as providing video data for playback to one or more devices in an enterprise network. This can allow security personnel to surveil an area using a computer or other device connected to the enterprise network to receive the video data. In other examples, the video data can be used by automated systems to identify people occupying the area, provide access to an area based on identifying people, detect activities or incidents occurring in the area, trigger security notifications based on the activities or incidents, etc. Each camera is connected to the enterprise network and can be coupled to a video recorder that communicates with the cameras to capture and/or store video streams from the cameras.

Devices operating in the enterprise network can communicate with the video recorder to access and/or otherwise playback videos captured by the cameras. The video recorder can offer live and recorded playback of video content. The video recorder can encode the video using a temporal encoding scheme, such as H.264, where frames are encoded in a group of pictures (GOP) as one key frame (an I-frame) followed by a collection of delta frames (P-frames or B-frames) that describe the delta between the delta frame and a preceding or next frame. The devices can request the video stream from the video recorder, and can request the video stream to start at a certain time, such as a time within the video stream, a time-of-day associated with the video stream, etc. In this regard, the video recorder can provide, to the device, the key frame associated with the video at the requested time along with the delta frames after the key frame until the delta frame corresponding to the requested time.

### SUMMARY

Embodiments and aspects according to the invention are, in particular, disclosed or defined in the appended claims.

In an aspect, a video recorder is provided that includes one or more processors, one or more memories coupled with the one or more processors, and instructions stored in the one or more memories. The instructions are operable, when executed by the one or more processors, to cause the video recorder to obtain a group of pictures (GOP) for an encoded video stream captured by a camera, wherein the GOP includes a key frame and, for each frame of multiple frames following the key frame, a delta frame that describes a delta from a previous frame or from a next frame to render the frame, generate, for at least one frame in the multiple frames, a new key frame corresponding to the at least one frame by obtaining the key frame and applying, to the key frame, a portion of the delta frames between the key frame and the at least one frame, and provide, to the device, the new key frame.

In another aspect, a. computer-implemented method for providing a requested video frame to a device is provided. The method includes obtaining, by a video recorder, a GOP for an encoded video stream captured by a camera, where the GOP includes a key frame and, for each frame of multiple frames following the key frame, a delta frame that describes a delta from a previous frame or from a next frame to render the frame, generating, by the video recorder and for at least one frame in the multiple frames, a new key frame corresponding to the at least one frame by obtaining the key frame and applying, to the key frame, a portion of the delta frames between the key frame and the at least one frame, and providing, to the device, the new key frame.

In another aspect, a computer-readable medium storing instructions thereon that, when executed by at least one computing device, cause the at least one computing device to perform operations for providing a requested video frame to a device is provided. The operations include obtaining, by a video recorder, a GOP for an encoded video stream captured by a camera, wherein the GOP includes a key frame and, for each frame of multiple frames following the key frame, a delta frame that describes a delta from a previous frame or from a next frame to render the frame, generating, by the video recorder and for at least one frame in the multiple frames, a new key frame corresponding to the at least one frame by obtaining the key frame and applying, to the key frame, a portion of the delta frames between the key frame and the at least one frame, and providing, to the device, the new key frame.

In another aspect, cameras, devices, or systems are provided that includes various hardware, software, or other components for preparing encoded video streams at a video recorder using one or more methods described herein. In another aspect, a computer-readable medium is provided herein that stores computer executable instructions for preparing encoded video streams at a video recorder using one or more methods described herein.

Further aspects of the present disclosure are described below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates an example of a system that includes a video recorder for communicating with various nodes to receive video data from one or more cameras, in accordance with aspects described herein;
FIG. 2 illustrates an example of a system including a video recorder for generating additional key frames in a video stream, in accordance with aspects described herein;
FIG. 3 is a flowchart of an example of a method for generating new key frames in a group of pictures (GOP), in accordance with aspects described herein.
FIG. 4 illustrates an example of a GOP including one or more I-frames and a collection of P-frames and B-frames, in accordance with aspects described herein.
FIG. 5 is a diagram of an example of a call flow between devices in a system including a video recorder, in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Cameras are often deployed in certain areas, such as areas within a building, for various purposes, such as video surveillance, subject identification/authentication, activity detections, etc. The cameras can communicate with a video recorder and/or other nodes of a video management system to provide captured video thereto for further processing. For example, the video recorder can include a network video recorder that can be coupled to the enterprise network (e.g., via a wired or wireless network connection, such as a local area network (LAN) connection, wireless LAN (WLAN) connection, etc.) as a video recorder and can receive video from the cameras via the enterprise network. In this example, the cameras may also be coupled to the enterprise network (e.g., via a wired or wireless network connection) for communicating with the network video recorder to provide video data, such as a video stream, thereto. Other interfaces between the camera and video recorder are possible to allow the cameras to provide the video data to the video recorder.

One or more cameras can capture video for providing to the video recorder. The video stream from the camera, or the video stream as stored by the video recorder, can be encoded using a temporal encoding format, such as H.264. Temporal encoding formats often include video frames of the video stream represented either as a full frame (I-frame) or a delta frame (P-frame or B-frame), where the delta frames describe changes from a preceding or next frame. The delta frames cannot be decoded in isolation, but rather require frames before (for P-frame) and/or frames after (for B-frames) to reconstruct the associated frame. This saves on storage and bandwidth usage, but can lead to complexity and resource usage during decoding. The I-frame and the associated delta frames collectively form a group of pictures (GOP).

To start playing a video mid-GOP, the frames leading up to that point are to be decoded, even though they need not be displayed. This burst of frames leading up to the desired start time on average can be half of a GOP. The GOP duration may be small, often one second in closed captioned television (CCTV) scenarios, but can be much longer when high compression is desirable for reduced storage and network bandwidth. Large GOPs can lead to a larger penalty when starting to play mid-GOP. The cost of bursting the frames leading up to the start time are bandwidth consumed, and there may be wasted effort or resources used for decoding but not displaying preceding frames and/or associated player complexity (e.g., knowing which decoded frames to drop and which to display).

In accordance with aspects described herein, a requested partial GOP of a video stream can be transcoded by the video recorder. For example, for the requested partial GOP (e.g., based on an indicated start time for the video stream), the video recorder can decode the I-frame and unwanted delta frames leading up to the frame corresponding to the desired start time. Upon decoding the requested frame, the video recorder can encode this as a new I-frame in the video stream. The video recorder can then encode the remainder of the GOP as new delta frames that reference the new I-frame, rather than that original I-frame. After the video recorder provides the partial GOP to the requesting device, the video recorder can then splice in the original content. In one example, transcode resources on the video recorder can be used for the first requested GOP. In this regard, for example, client-side burst decoding can be replaced with video recorder side transcoding of at least a first requested GOP. In addition, network costs of pre-start burst can be eliminated and transmitting of wasted frames can be mitigated. In addition, this can allow for improved simplicity at the client playback device for each frame displayed (e.g., a burst-aware client device is not required).

Moreover, in an example, in the situation where a burst-aware client device is used, the video recorder can determine which approach to take. For example, if the burst corresponding to the number of frames of the GOP that are decoded to reach the requested frame is small (e.g., less than a threshold number of frames), the video recorder may determine to use existing mechanism of returning the I-frame and delta frames to the requesting device. If, however, the burst is large (e.g., greater than or equal to the threshold number of frames), the advantages of video recorder side first GOP transcoding can be increased, and the video recorder can determine to perform transcoding of the new I-frame for providing to the requesting device. This scheme may also be useful for exporting video clips of a precise duration.

In accordance with additional aspects described herein, the video recorder can autonomously determine for which frames in a video stream to generate new I-frames mid-GOP to conserve transcoding resources on the video recorder. For example, the video recorder can determine the frames for generating new I-frames based on one or more considerations related to usage patterns (e.g., by a playback device) in requesting video from the one or more cameras, content within the video, or triggers from other systems, such as a detected event on an associated access control device, etc. Based on likelihood of future play requests, in this regard, the video recorder can preemptively transcode the partial GOP and store it alongside the native video. If a play request arrives for the predicted time, the stored, transcoded, partial GOP is delivered to the client, then playback splices over to the original content with normal GOP durations, as described. Predictions about start times may include multiple times within a GOP. Thus, for example, the video recorder may perform multiple preemptive transcodes and store these transcodes to facilitate multiple start times. Considering the native and all the transcoded partial GOP variants, there can be many key frames clustered around predicted start times. Start times that are predicted to be of interest can have a higher key frame density.

Turning now to the figures, example aspects are depicted with reference to one or more modules or components described herein, where modules or components in dashed lines may be optional.

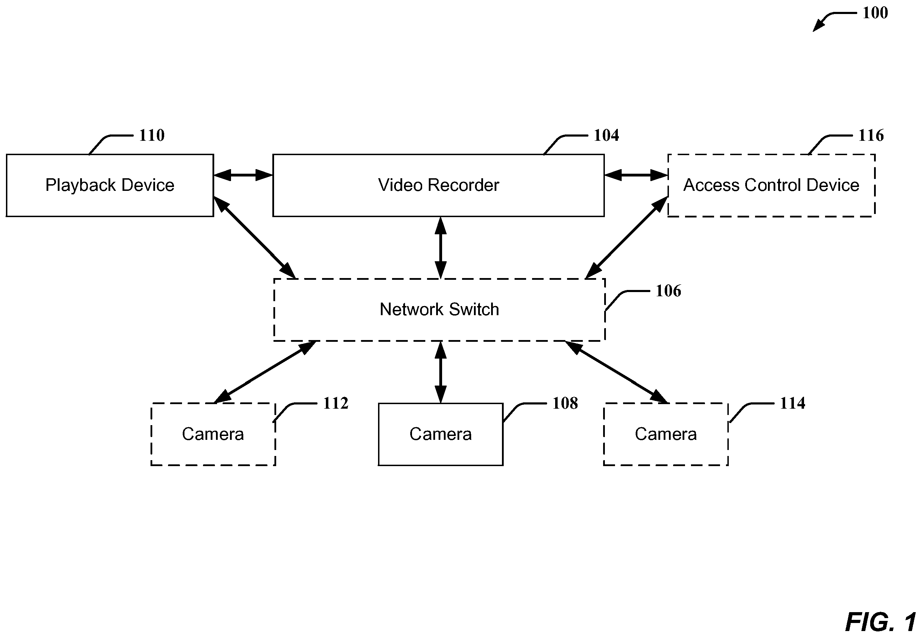

Referring to FIG. 1, an example of a system 100 is shown that includes a video recorder 104 for communicating with various nodes to receive video data from one or more cameras 108, 112, or 114, in accordance with aspects described herein. For example, the video recorder 104 can be, or can include, a network video recorder (NVR) that can receive video data, audio data, metadata, etc. from one or more cameras 108, 112, and/or 114, via a network switch 106. The multiple cameras 108, 112, and/or 114 can be red, green, blue (RGB) cameras, infrared cameras, depth cameras, etc. In this regard, for example, the multiple cameras 108, 112, and/or 114 can be network enabled such that they are configured to communicate with network hardware, such as the network switch 106 via a network interface card that is communicatively coupled to the network switch 106 by a wired or wireless connection. The multiple cameras 108, 112, and/or 114 can each capture video data, audio data, and/or associated metadata that the multiple cameras 108, 112, and/or 114 can each provide upstream to the video recorder 104 (e.g., via the network switch 106 or other interface between the video recorder 104 and the camera(s) 108, 112, and/or 114).

System 100 can also include a playback device 110 that can access, from the video recorder 104 (e.g., via network switch 106 or other interface) video streams as captured by the cameras 108, 112, and/or 114, for playback on the playback device 110. For example, the playback device 110 can be a computer, a mobile device, such as a smartphone, tablet, etc., a television, or substantially any device that can receive and playback video streams from a video recorder 104. In this regard, for example, the playback device 110 may include a display for displaying playback of the video stream. The display of the playback device 110 may support a certain quality of video (e.g., resolution, fps, etc.) for playback, which may be, or may be compatible with, at least one resolution at which the camera(s) 108, 112, and/or 114 can capture video.

In an example, the video recorder 104 can be configured to request video streams from the one or more cameras 108, 112, and/or 114 and can receive the video streams as encoded using a temporal encoding format, or can encode the received video streams itself for storage and/or providing to a playback device. The temporal encoding format may include a format such as H.264, as described above, which can encode I-frames, P-frames, and/or B-frames. The playback device 110 can request and receive encoded video streams from the video recorder 104, and can decode the video streams based on the temporal encoding format to process each frame based on modifying a frame occurring before a currently decoded frame (for a P-frame) and/or a frame occurring after a currently decoded frame (for a B-frame).

In accordance with aspects described herein, for a requested video frame that corresponds to a delta frame in a GOP, video recorder 104 can generate a new I-frame (also referred to as a key frame) in the GOP for providing to the requesting device. For example, the video recorder 104 can generate the new I-frame by transcoding the new I-frame based on obtaining the I-frame referenced by the requested video frame and applying the delta frames between the referenced I-frame and the requested video frame. In this regard, the video recorder 104 can perform this part of the process, which can save decoding resources at the requesting device and/or bandwidth for transmitting the multiple delta frames between the referenced I-frame and the requested video frame. In addition, in an example, the video recorder 104 can replace the requested frame in the GOP with the new I-frame and can update the remaining delta frames in the GOP to reference the new I-frame instead of the original I-frame in the GOP.

In one example, the video recorder 104 can autonomously generate new I-frames for frames within a GOP without necessarily receiving a request for the frames. For example, video recorder 104 can generate a new I-frame for a frame in a GOP based on detecting a usage pattern by the playback device 110 in requesting video from the video recorder 104, based on content in video being recorded by the at least one camera 108, etc. In another example, system 100 can include an access control device 116, which can be coupled to the video recorder 104 via network switch 106 or another interface. For example, the access control device 116 can include one or more devices in an access control system in an enterprise that can obtain credentials of a user for controlling access to one or more areas of a building (e.g., a door lock, a turnstile or other entry point, etc.) or other resources (e.g., a digital login prompt, etc.). In this example, video recorder 104 can generate a new I-frame for a frame in a GOP based on a time associated with a detected access control event, a person identified as associated with the detected access control event, etc.

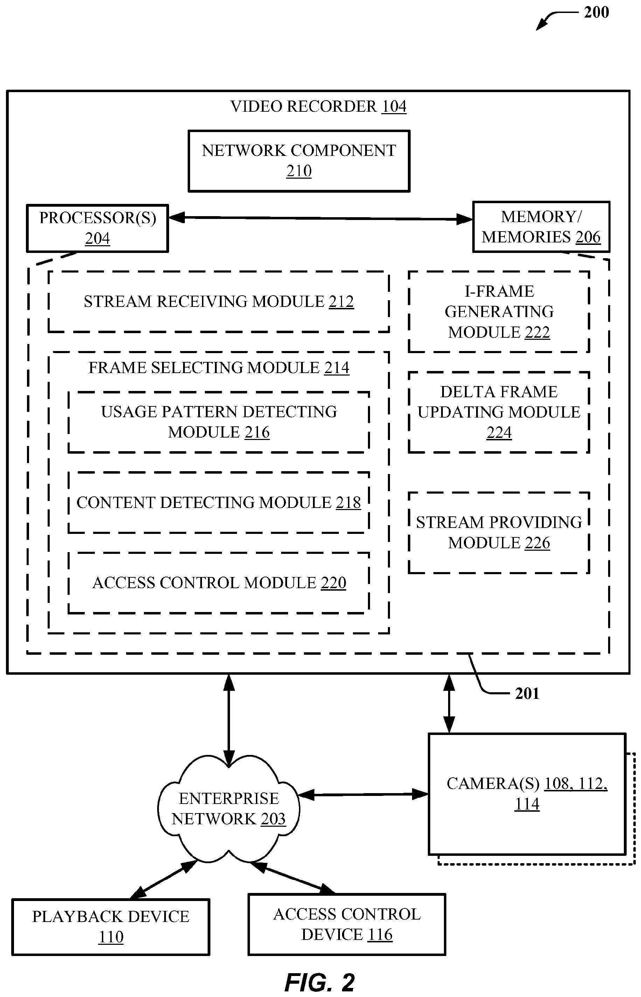

FIG. 2 is a schematic diagram of an example of a system 200 including a video recorder 104 for generating additional key frames in a video stream, in accordance with aspects described herein. Video recorder 104 can include or can otherwise be coupled with one or more processors 204 and/or a memory or memories 206, where the processor(s) 204 and/or memory/memories 206 can be configured to execute or store instructions or other parameters related to various components that provide certain functions, such as a stream receiving module 212 for receiving a video stream from one or more cameras 108, 112, and/or 114, a frame selecting module 214 for selecting one or more delta frames in a GOP of the video stream to generate as a new I-frame, an I-frame generating module 222 for generating the new I-frame in place of a delta frame, a delta frame updating module 224 for updating remaining delta frames in the GOP to reference the new I-frame, and/or a stream providing module 226 for providing the video stream, including the new I-frame, to a requesting device. For example, processor(s) 204 and memory/memories 206 may be separate components communicatively coupled by a bus (e.g., on a motherboard or other portion of a computing device, on an integrated circuit, such as a system on a chip (SoC), etc.), components integrated within one another (e.g., processor(s) 204 can include the memory/memories 206 as an on-board component 201), and/or the like. Memory/memories 206 may store instructions, parameters, data structures, etc., for use/execution by processor(s) 204 to perform functions described herein.

For example, video recorder 104 can also include a network component 210 for communicating with the enterprise network 203 over a backend wired or wireless connection. Network component 210 can include a network port (e.g., Ethernet port) for a wired connection to the enterprise network 203, a WLAN connection for wireless connection to the enterprise network 203, and/or the like. In addition, cameras 108, 112, or 114, playback device 110, and/or access control device 116 may similarly include processor(s) 204, memory/memories 206, network component 210, etc. to facilitate transmitting or receiving information over the enterprise network 203, in accordance with aspects described herein.

In an example, frame selecting module 214 can provide various modules executing functionality described herein to select delta frames to be transcoded as new I-frames. For example, frame selecting module 214 can include one or more of a usage pattern detecting module 216 for detecting usage patterns by a playback device and/or an associated user with respect to requesting playback of videos from the video recorder 104 (or from other video recorders or components of the enterprise network 203), which may impact which frames are selected to be new I-frames, a content detecting module 218 for detecting certain content in the video stream (e.g., detecting persons), which may impact which frames are selected to be new I-frames, and/or an access control module 220 for detecting occurrence of an access control event at an access control device 116, which may impact which frames are selected to be new I-frames.

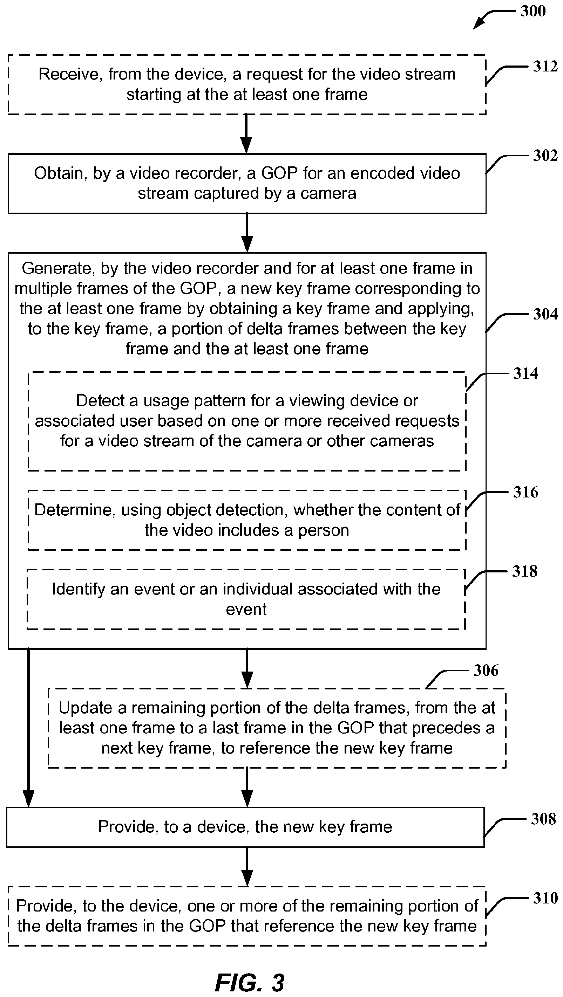

Referring to FIG. 3, an example of a method 300 for generating new key frames in a GOP is depicted, in accordance with aspects described herein. The operations of the method 300 may be performed by one or more modules or components of the video recorder 104, as described herein.

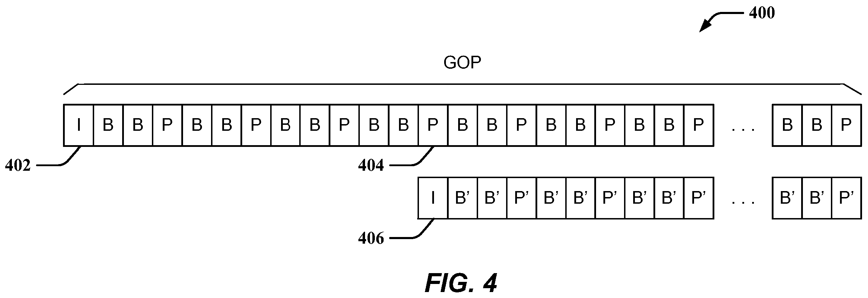

At 302, the method 300 may include obtaining, by the video recorder, a GOP for an encoded stream captured by a camera. In an example, stream receiving module 212, e.g., in conjunction with the one or more processors 204, memory/memories 206, etc., can obtain the GOP for the encoded video stream captured by the camera (e.g., camera 108, 112, and/or 114). For example, the video stream can be encoded by the camera and provided to the video recorder 104. In another example, the video recorder 104 can encode the video stream as captured and received from the camera. In any case, the video stream can be encoded using a temporal encoding format, such as H.264, to encode the video stream as a collection of GOPs, where each GOP can have an I-frame followed by a number of P-frames or B-frames. An example is illustrated in FIG. 4.

FIG. 4 illustrates an example of a GOP 400 including an I-frame 402 and a collection of P-frames and B-frames, in accordance with aspects described herein. Each frame of the GOP 400 can correspond to an image frame of the video stream, and can correspond to a playback time for the video stream, which may be based on a number of frames-per-second (fps) at which the video is encoded. As described, the I-frame 402 in the GOP can be a full frame (e.g., a full image), and the P-frames and B-frames can be delta frames that describe a difference between the frame and a preceding or next frame. In this regard, the video stream can be decoded by decoding the I-frame 402, and then for each delta frame, and applying the modifications of the delta frame. Each decoded frame can be displayed to render the video stream. To decode a certain frame within the GOP (e.g., frame 404), such as for starting playback of the video within the GOP, previously the video recorder would provide, to a requesting device, the I-frame 402 and the collection of delta frames between the I-frame 402 and frame 404 (along with frame 404). In this example, the requesting device would decode each frame to arrive at the requested frame 404.

Referring to FIG. 3, at 304, the method 300 may include generating, by the video recorder and for at least one frame in multiple frames of the GOP, a new key frame corresponding to at least one frame by obtaining a key frame and applying, to the key frame, a portion of delta frames between the key frame and the at least one frame. In an example, I-frame generating module 222, e.g., in conjunction with the one or more processors 204, memory/memories 206, etc., can generate, for at least one frame in the multiple frames of the GOP, the new key frame (e.g., I-frame) corresponding to the at least one frame by obtaining the key frame (e.g., an original I-frame for the at least one frame) and applying, to the key frame, the portion of delta frames (e.g., P-frames and/or B-frames) between the key frame and the at least one frame. For example, I-frame generating module 222 can transcode the new key frame (e.g., I-frame) in this regard, and can store the new key frame in the GOP as an I-frame.

At 306, the method 300 may optionally include updating a remaining portion of the delta frames, from the at least one frame to a last frame in the GOP that precedes a next key frame, to reference the new key frame. In an example, delta frame updating module 224, e.g., in conjunction with the one or more processors 204, memory/memories 206, etc., can update the remaining portion of the delta frames, from the at least one frame to a last frame in the GOP that precedes the next key frame, to reference the new key frame. In this regard, the new key frame can be stored in the GOP in place of the delta frame that previously corresponded to the at least one frame, such that the new key frame can be provided along with its associated delta frames to provide the video stream to one or more devices. An example is shown in FIG. 4.

Referring to FIG. 4, in GOP 400, where frame 404 is determined for generating a new key frame, frame 404 can be transcoded as an I-frame 406, as described above, and can be replaced as an I-frame in the GOP 400. In addition, the delta frames occurring after the newly transcoded I-frame 406 in the GOP 400, and/or before a next I-frame, can be updated to reference the I-frame 406 (e.g., instead of I-frame 402), which is shown as B'-frames and P'-frames in GOP 400. As described, the previous P-frames and B-frames after frame 404 in the GOP 400 can also be replaced by the P'-frames and B'-frames. In this regard, for example, the new I-frame 404 can be provided to a requesting device (e.g., playback device 110) based on the requesting device requesting a starting frame corresponding to frame 402, and the subsequent P'-frames and B'-frames can be provided as delta frames to provide the video stream to the requesting device.

Referring to FIG. 3, at 308, the method 300 may include providing, to the device, the new key frame. In an example, stream providing module 226, e.g., in conjunction with the one or more processors 204, memory/memories 206, etc., can provide, to the device (e.g., a requesting device, such as playback device 110), the new key frame, which may be part of providing the video stream to the device at a requested starting time. In addition, at 310, the method 300 may optionally include providing, to the device, one or more of the remaining portion of the delta frames in the GOP that reference the new key frame. In an example, stream providing module 226, e.g., in conjunction with the one or more processors 204, memory/memories 206, etc., can provide, to the device (e.g., a requesting device, such as playback device 110), one or more of the remaining portion of the delta frames in the GOP that reference the new key frame. In this regard, for example, stream providing module 226 can provide the new key frame and splice in the original content of the video stream.

At 312, the method 300 can optionally include receiving, from the device, a request for the video stream starting at the at least one frame. In an example, stream providing module 226, e.g., in conjunction with the one or more processors 204, memory/memories 206, etc., can receive, from the device (e.g., playback device 110) the request for the video stream starting at the at least one frame. Thus, for example, stream providing module 226 can provide the stream to the device, including the new key frame and the updated delta frames, based on the received request. In one example, frame selecting module 214 can select the at least one frame to be generated as a new key frame based at least in part on the request from the device. For example, frame selecting module 214 can select at least a first requested frame in the GOP, or a first n number of requested frames in the GOP, to be replaced with a generated new key frame, so as to prevent the entire GOP (or a significant portion of the GOP) from becoming key frames.

In another example, frame selecting module 214 can determine whether to select a candidate frame for generating a new key frame based on how many frames (e.g., a number of frames) are between a preceding key frame and the candidate frame. For example, where the candidate frame is less than a threshold number of frames from the key frame, frame selecting module 214 may determine to not generate a new key frame, as the bandwidth or processing used to decode the candidate frame may be acceptable. Where the candidate frame is greater than or equal to the threshold number of frames from the key frame, however, frame selecting module 214 may determine to generate a new key frame for the candidate frame, as described herein.

In other examples described herein, frame selecting module 214 can autonomously or preemptively select a frame within a GOP to be transcoded as a key frame based on one or more of various possible considerations described herein. This can enable transcoding predicted frames when resources are available, as opposed to transcoding on-demand. Moreover, for example, the selecting of frames may be performed based on a time-of-day (e.g., as related to a usage pattern of requesting video from the camera or from other cameras), a detected event (e.g., detected video content, access control event, presence of a certain individual, etc.), a system parameter, such as storage capacity, processing capability, etc. of the video recorder 104 and/or the playback device 110, and/or the like.

In one example, generating the new key frame, at 304, may optionally include, at 314, detecting a usage pattern for a viewing device or associated user based on one or more received requests for a video stream of the camera or other cameras. In an example, usage pattern detecting module 216, e.g., in conjunction with the one or more processors 204, memory/memories 206, frame selecting module 214, etc., can detect a usage pattern for a viewing device (e.g., playback device 110) or associated user based on one or more received requests for a video stream of the camera or other cameras. For example, video recorder 104 can receive requests from viewing devices (also referred to as playback devices) for video streams to start at certain points in time of the video stream (and/or time-of-day). In this regard, usage pattern detecting module 216 can detect that a device or associated user requests video from the camera starting at the same time each day or certain days of the week, etc., and frame selecting module 214 can use this information to select frames to encode as new key frames in a GOP. In another example, usage pattern detecting module 216 can detect that the playback device 110 or associated user frequently requests video streams from multiple cameras, and frame selecting module 214 can use this information to select, based on a request for a video stream at a certain starting time from one camera, frames in video streams for the other cameras at the same starting time to transcode as new key frames.

In one example, over time, usage pattern detecting module 216 can predict starting frames that the playback device may request in a future time period based on one or more previous requests. In this regard, for example, frame selecting module 214 can select the frames to transcode as new key frames based on the similar historical starting time requests to have the new key frames prepared to save decoding resources at the playback device 110. In one specific example, usage pattern detecting module 216 may provide previous request data of requests received from a playback device 110, or an associated user, to a machine learning (ML) model (not shown) as training data, and can then leverage the ML model to predict requested starting times for video streams for a future time period to transcode associated frames as new key frames. In addition, for example, the usage pattern (and/or the detected content, triggers from other systems, etc., as described herein) can be used with one another or with other considerations, such as the number of frames between the frame and its original key frame, to determine whether to generate the new key frame and/or for which frames to generate new key frames.

In one example, generating the new key frame, at 304, may optionally include, at 316, determining, using object detection, whether the content of the video includes a person. In an example, content detecting module 218, e.g., in conjunction with the one or more processors 204, memory/memories 206, frame selecting module 214, etc., can determine, using object detection, whether the content of the video includes a person or another object. For example, content detecting module 218 can monitor a video stream being received from the camera to determine whether and/or when a person is detected. In one example, frame selecting module 214 can select a frame in which a person is detected for transcoding as a new key frame, as this frame may be selected as a starting frame for the video stream. In other examples, content detecting module 218 can determine an identity of persons in the video stream content, identify certain activities occurring in the video stream content (e.g., emergency situations, theft, etc.), and/or the like, and frame selecting module 214 can select the frame for transcoding as a key frame.

In one example, generating the new key frame, at 304, may optionally include, at 318, identifying an event or an individual associated with the event. In an example, access control module 220, e.g., in conjunction with the one or more processors 204, memory/memories 206, frame selecting module 214, etc., can identify the event or the individual associated with the event. For example, the event can include an access control event at an access control device 116, or substantially any event triggered by another system. For example, access control module 220 can receive notification of the event (e.g., access control event from access control device 116), such as a door unlocking, an access attempt at a lock or turnstile by an individual, etc., and frame selecting module 214 can select a frame associated with a time of the event for generating a new key frame based on detecting the event, and/or based on identifying a certain individual associated with the event. In one example, the event can be detected in an area associated with the camera, such as an area of a building under surveillance by the camera, an access control device in an area of the building that leads to an area under surveillance by the camera, etc.

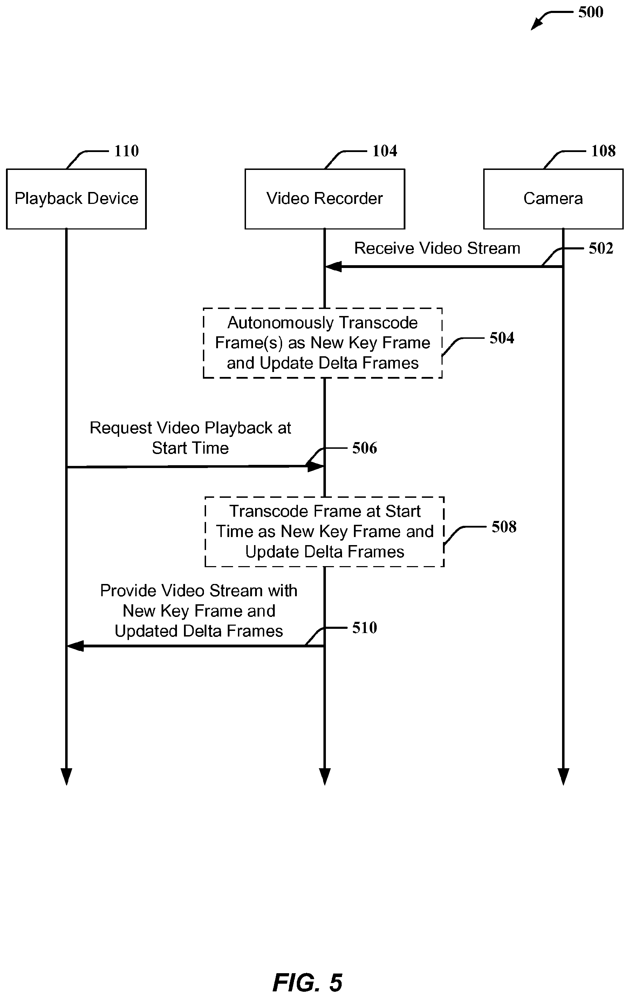

FIG. 5 is a diagram of an example of a call flow 500 between devices in a system including a video recorder, in accordance with aspects described herein. In call flow 500, at 502, a video recorder 104 can receive a video stream from the camera 108, which may be encoded using a temporal encoding format (e.g., by the camera 108 or video recorder 104). Optionally, at 504, the video recorder 104 can autonomously transcode one or more frames in the video streams as a new key frame in an associated GOP and can update certain delta frames in the GOP to reference the new key frame, as described herein. For example, as described, video recorder 104 can autonomously transcode the frame(s) as new key frames based on a usage pattern of devices requesting, via video recorder 104, video streams from the camera 108 or other cameras, based on detected content in the video, based on a trigger received from another system or device (e.g., an access control device), etc.

At 506, the playback device 110 can request video playback at a start time from the video recorder 104. Optionally, at 508, the video recorder 104 can, based on the request, transcode one or more frames in the video streams as a new key frame in an associated GOP and can update certain delta frames in the GOP to reference the new key frame, as described herein. This can be additionally or alternatively to autonomously transcoding key frames. In addition, this can be for a first requested frame or a first number of requested frames in a given GOP, etc., as described above. In any case, at 510, the video recorder 104 can provide the video stream with the new key frame and updated delta frames to the playback device 110.

Some further example aspects are provided below.
Clause 1. A video recorder, comprising: one or more processors; one or more memories coupled with the one or more processors; and instructions stored in the one or more memories and operable, when executed by the one or more processors, to cause the video recorder to: obtain a GOP for an encoded video stream captured by a camera, wherein the GOP includes a key frame and, for each frame of multiple frames following the key frame, a delta frame that describes a delta from a previous frame or from a next frame to render the frame; generate, for at least one frame in the multiple frames, a new key frame corresponding to the at least one frame by obtaining the key frame and applying, to the key frame, a portion of the delta frames between the key frame and the at least one frame; and provide, to a device, the new key frame.
Clause 2. The video recorder of clause 1, wherein the instructions, when executed by the one or more processors, to cause the video recorder to receive a request from the device for the at least one frame, wherein the instructions, when executed by the one or more processors, to cause the video recorder provide the new key frame to the device based on the request.
Clause 3. The video recorder of clause 2, wherein the instructions, when executed by the one or more processors, to cause the video recorder provide, to the device, one or more subsequent delta frames in the GOP, wherein the one or more subsequent delta frames reference the new key frame.
Clause 4. The video recorder of any of clauses 2 or 3, wherein the instructions, when executed by the one or more processors, to cause the video recorder generate the new key frame based at least in part on detecting that a number of delta frames preceding the at least one frame in the GOP achieves a threshold.
Clause 5. The video recorder of any of clauses 1-4, wherein the instructions, when executed by the one or more processors, to cause the video recorder detect a usage pattern for one or more devices based on one or more received requests for video streams of the camera or another camera, the instructions, when executed by the one or more processors, to cause the video recorder generate the new key frame based at least in part on the usage pattern.
Clause 6. The video recorder of any of clauses 1-5, wherein the instructions, when executed by the one or more processors, to cause the video recorder generate the new key frame based at least in part on detecting content within the at least one frame.
Clause 7. The video recorder of clause 6, wherein the detected content includes one or more persons in the at least one frame detected using object detection.
Clause 8. The video recorder of any of clauses 1-7, wherein the instructions, when executed by the one or more processors, to cause the video recorder generate the new key frame based at least in part on detecting an access control event in an area corresponding to the camera at a time corresponding to a time of the at least one frame.
Clause 9. A computer-implemented method for providing a requested video frame to a device, comprising:
   obtaining, by a video recorder, a group of pictures (GOP) for an encoded video stream captured by a camera, wherein the GOP includes a key frame and, for each frame of multiple frames following the key frame, a delta frame that describes a delta from a previous frame or from a next frame to render the frame;
   generating, by the video recorder and for at least one frame in the multiple frames, a new key frame corresponding to the at least one frame by obtaining the key frame and applying, to the key frame, a portion of the delta frames between the key frame and the at least one frame; and
   providing, to the device, the new key frame.
Clause 10. The computer-implemented method of clause 9, further comprising receiving, by the video recorder, a request from the device for the at least one frame, wherein providing the new key frame to the device is based on the request.
Clause 11. The computer-implemented method of clause 10, further comprising providing, to the device, one or more subsequent delta frames in the GOP, wherein the one or more subsequent delta frames reference the new key frame.
Clause 12. The computer-implemented method of any of clauses 10 or 11, wherein generating the new key frame is based at least in part on detecting that a number of delta frames preceding the at least one frame in the GOP achieves a threshold.
Clause 13. The computer-implemented method of any of clauses 9-12, further comprising detecting a usage pattern for one or more devices based on one or more received requests for video streams of the camera or another camera, wherein generating the new key frame is based at least in part on the usage pattern.
Clause 14. The computer-implemented method of any of clauses 9-13, wherein generating the new key frame is based at least in part on detecting content within the at least one frame.
Clause 15. The computer-implemented method of clause 14, wherein the detected content includes one or more persons in the at least one frame detected using object detection.
Clause 16. The computer-implemented method of any of clauses 9-15, wherein generating the new key frame is based at least in part on detecting an access control event in an area corresponding to the camera at a time corresponding to a time of the at least one frame.
Clause 17. A computer-readable medium storing instructions thereon that, when executed by at least one computing device, cause the at least one computing device to perform operations for providing a requested video frame to a device, comprising:
   obtaining, by a video recorder, a group of pictures (GOP) for an encoded video stream captured by a camera, wherein the GOP includes a key frame and, for each frame of multiple frames following the key frame, a delta frame that describes a delta from a previous frame or from a next frame to render the frame;
   generating, by the video recorder and for at least one frame in the multiple frames, a new key frame corresponding to the at least one frame by obtaining the key frame and applying, to the key frame, a portion of the delta frames between the key frame and the at least one frame; and
   providing, to the device, the new key frame.
Clause 18. The computer-readable medium of clause 17, the operations further comprising receiving, by the video recorder, a request from the device for the at least one frame, wherein providing the new key frame to the device is based on the request.
Clause 19. The computer-readable medium of any of clauses 17 or 18, the operations further comprising detecting a usage pattern for one or more devices based on one or more received requests for video streams of the camera or another camera, wherein generating the new key frame is based at least in part on the usage pattern.
Clause 20. The computer-readable medium of any of clauses 17-19, wherein generating the new key frame is based at least in part on detecting content within the at least one frame.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

## Claims

1. A video recorder, comprising:
one or more processors;
one or more memories coupled with the one or more processors; and
instructions stored in the one or more memories and operable, when executed by the one or more processors, to cause the video recorder to:
obtain a group of pictures (GOP) for an encoded video stream captured by a camera, wherein the GOP includes a key frame and, for each frame of multiple frames following the key frame, a delta frame that describes a delta from a previous frame or from a next frame to render the frame;
generate, for at least one frame in the multiple frames, a new key frame corresponding to the at least one frame by obtaining the key frame and applying, to the key frame, a portion of the delta frames between the key frame and the at least one frame; and
provide, to a device, the new key frame.

2. The video recorder of claim 1, wherein the instructions, when executed by the one or more processors, to cause the video recorder to receive a request from the device for the at least one frame, wherein the instructions, when executed by the one or more processors, to cause the video recorder provide the new key frame to the device based on the request.

3. The video recorder of claim 1 or 2, wherein the instructions, when executed by the one or more processors, to cause the video recorder provide, to the device, one or more subsequent delta frames in the GOP, wherein the one or more subsequent delta frames reference the new key frame.

4. The video recorder of any of claims 1 to 3, wherein the instructions, when executed by the one or more processors, to cause the video recorder generate the new key frame based at least in part on detecting that a number of delta frames preceding the at least one frame in the GOP achieves a threshold.

5. The video recorder of any of the preceding claims, wherein the instructions, when executed by the one or more processors, to cause the video recorder detect a usage pattern for one or more devices based on one or more received requests for video streams of the camera or another camera, the instructions, when executed by the one or more processors, to cause the video recorder generate the new key frame based at least in part on the usage pattern.

6. The video recorder of any of the preceding claims, wherein the instructions, when executed by the one or more processors, to cause the video recorder generate the new key frame based at least in part on detecting content within the at least one frame, wherein in particular the detected content includes one or more persons in the at least one frame detected using object detection.

7. The video recorder of any of the preceding claims, wherein the instructions, when executed by the one or more processors, to cause the video recorder generate the new key frame based at least in part on detecting an access control event in an area corresponding to the camera at a time corresponding to a time of the at least one frame.

8. A computer-implemented method for providing a requested video frame to a device, comprising:
obtaining, by a video recorder, a group of pictures (GOP) for an encoded video stream captured by a camera, wherein the GOP includes a key frame and, for each frame of multiple frames following the key frame, a delta frame that describes a delta from a previous frame or from a next frame to render the frame;
generating, by the video recorder and for at least one frame in the multiple frames, a new key frame corresponding to the at least one frame by obtaining the key frame and applying, to the key frame, a portion of the delta frames between the key frame and the at least one frame; and
providing, to the device, the new key frame.

9. The computer-implemented method of claim 8, further comprising at least one of or a combination of at least two of the following features (i) to (v):
(i) receiving, by the video recorder, a request from the device for the at least one frame, wherein providing the new key frame to the device is based on the request,
(ii) providing, to the device, one or more subsequent delta frames in the GOP, wherein the one or more subsequent delta frames reference the new key frame,
(iii) generating the new key frame is based at least in part on detecting that a number of delta frames preceding the at least one frame in the GOP achieves a threshold,
(iv) detecting a usage pattern for one or more devices based on one or more received requests for video streams of the camera or another camera, wherein generating the new key frame is based at least in part on the usage pattern,
(v) generating the new key frame is based at least in part on detecting an access control event in an area corresponding to the camera at a time corresponding to a time of the at least one frame.

10. The computer-implemented method of claim 8 or 9, wherein generating the new key frame is based at least in part on detecting content within the at least one frame, wherein preferably the detected content includes one or more persons in the at least one frame detected using object detection.

11. A computer-readable medium storing instructions thereon that, when executed by at least one computing device, cause the at least one computing device to perform operations for providing a requested video frame to a device, comprising:
obtaining, by a video recorder, a group of pictures (GOP) for an encoded video stream captured by a camera, wherein the GOP includes a key frame and, for each frame of multiple frames following the key frame, a delta frame that describes a delta from a previous frame or from a next frame to render the frame;
generating, by the video recorder and for at least one frame in the multiple frames, a new key frame corresponding to the at least one frame by obtaining the key frame and applying, to the key frame, a portion of the delta frames between the key frame and the at least one frame; and
providing, to the device, the new key frame.

12. The computer-readable medium of claim 11, the operations further comprising receiving, by the video recorder, a request from the device for the at least one frame, wherein providing the new key frame to the device is based on the request.

13. The computer-readable medium of claim 11 or 12, the operations further comprising detecting a usage pattern for one or more devices based on one or more received requests for video streams of the camera or another camera, wherein generating the new key frame is based at least in part on the usage pattern.

14. The computer-readable medium of any of claims 11 to 13, wherein generating the new key frame is based at least in part on detecting content within the at least one frame.

15. The computer-readable medium of any of claims 11 to 14, wherein the operations include operations or features of a method according to any of claims 8 to 10.
